(19) Europäisches Patentamt
European Patent Office
Office européen des brevets

(11) **EP 4 697 409 A2**

(12) **EUROPEAN PATENT APPLICATION**

(43) Date of publication:
**18.02.2026 Bulletin 2026/08**

(51) International Patent Classification (IPC):
*H01M 4/36* (2006.01)   *H01M 4/62* (2006.01)
*H01M 10/0562* (2010.01)   *H01M 4/131* (2010.01)
*H01M 4/02* (2006.01)

(21) Application number: **25195834.4**

(22) Date of filing: **14.08.2025**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.08.2024 KR 20240109648**

(71) Applicant: **SAMSUNG SDI CO., LTD.
Yongin-si, Gyeonggi-do 17084 (KR)**

(72) Inventors:
• **LEE, Won Gi
Yongin-si, Gyeonggi-do 17084 (KR)**
• **CHOI, JINKYU
Yongin-si, Gyeonggi-do 17084 (KR)**

(74) Representative: **Michalski Hüttermann & Partner
Patentanwälte mbB
Kaistraße 16A
40221 Düsseldorf (DE)**

(54) **POSITIVE ELECTRODE FOR ALL-SOLID-STATE BATTERY AND ALL-SOLID-STATE BATTERY INCLUDING THE SAME**

(57)   Disclosed are positive electrode layers, all-solid-state batteries including the positive electrode layers, and methods of manufacturing the positive electrode layers. The positive electrode layer includes a positive electrode current collector and a positive electrode active material layer which includes a first active material layer, a second active material layer, and a middle layer. The first active material layer includes a first positive electrode active material, a first solid electrolyte, a first binder, and a first conductive material. The second active material layer includes a second positive electrode active material, a second solid electrolyte, a second binder, and a second conductive material. The middle layer includes a third solid electrolyte, a third binder, and a third conductive material. A total amount of the third solid electrolyte, the third binder, and the third conductive material is about 50 wt% or more relative to a total weight of the middle layer.

FIG. 1

**Description**

CROSS-REFERENCE TO RELATED APPLICATION

This application claims priority under 35 U.S.C § 119 to Korean Patent Application No. 10-2024-0109648 filed on August 16, 2024 in the Korean Intellectual Property Office, the disclosure of which is hereby incorporated by reference in its entirety.

BACKGROUND

The present disclosure relates to a positive electrode for an all-solid-state battery, an all-solid-state battery including the positive electrode, and a method of manufacturing the positive electrode, and more particularly, to a multi-layered film that transfers an all-solid-state battery cell.

Development of high-energy density and safe batteries is driven by industrial demands. For example, lithium ion batteries are commercialized not only in formation-related and communication devices, but also, e.g., in the automotive industry. In the automotive industry, safety is emphasized due to the direct relation thereof to preserving human lives.

An all-solid-state battery includes a solid electrolyte in place of a liquid electrolyte. As all-solid-state batteries typically do not use flammable organic dispersion mediums, the possibility of fire or explosion may be significantly reduced even in the event of short-circuits.

SUMMARY

Some example embodiments of the present disclosure include an all-solid-state battery with improved stability and desired or improved electrochemical characteristics.

According to some example embodiments of the present disclosure, a positive electrode layer for an all-solid-state battery may include a positive electrode current collector, and a positive electrode active material layer on the positive electrode current collector. The positive electrode active material layer may include a first active material layer on the positive electrode current collector, a second active material layer on the first active material layer, and a middle layer between the first active material layer and the second active material layer. The first active material layer may include a first positive electrode active material, the first solid electrolyte, a first binder, and a first conductive material. The second active material layer may include a second positive electrode active material, the second solid electrolyte, a second binder, and a second conductive material. The middle layer may include a third solid electrolyte, a third binder, and a third conductive material. A total amount of the third solid electrolyte, the third binder, and the third conductive material in the middle layer may be equal to or greater than about 50 wt% relative to a total weight of the middle layer.

According to some example embodiments of the present disclosure, an all-solid-state battery may include a positive electrode layer, a negative electrode layer, and a solid electrolyte layer between the positive electrode layer and the negative electrode layer. The positive electrode layer may include a positive electrode current collector, and a positive electrode active material layer on the positive electrode current collector. The positive electrode active material layer may include a positive electrode active material, a solid electrolyte, a binder, and a conductive material. The positive electrode active material layer may include a first section adjacent to the positive electrode current collector, a second section on a center of the positive electrode active material layer, and a third section adjacent to the solid electrolyte layer. The second section may be between the first section and the third section. An amount of the positive electrode active material in the second section may be less than an amount of the positive electrode active material in the first section. The amount of the positive electrode active material in the second section may be less than an amount of the positive electrode active material in the third section.

According to some example embodiments of the present disclosure, a method of manufacturing a positive electrode layer for an all-solid-state battery may include coating on a positive electrode current collector a first positive electrode slurry to form a first active material layer, forming a middle layer on the first active material layer, and providing the middle layer with a first self-standing film to form a second active material layer. The first active material layer may include a first positive electrode active material, the first solid electrolyte, a first binder, and a first conductive material. The second active material layer may include second positive electrode active material, the second solid electrolyte, a second binder, and a second conductive material. The middle layer may include a third solid electrolyte, a third binder, and a third conductive material. A total amount of the third solid electrolyte, the third binder, and the third conductive material in the middle layer may be equal to or greater than about 50 wt% relative to a total weight of the middle layer.

BRIEF DESCRIPTION OF DRAWINGS

FIG. 1 illustrates a cross-sectional view showing an all-solid-state battery according to some embodiments of the present disclosure.

FIG. 2 illustrates an enlarged view showing section M of FIG. 1.

FIGS. 3 to 6 illustrate cross-sectional views showing a method of manufacturing a positive electrode layer for an all-solid-state battery according to some embodiments of the present disclosure.

FIG. 7 illustrates an enlarged view showing section M of FIG. 1.

FIGS. 8 and 9 illustrate cross-sectional views showing a method of forming a first composite layer according to some embodiments of the present disclosure.

FIGS. 10 and 11 illustrate cross-sectional views showing a method of forming a second composite layer according to some embodiments of the present disclosure.

FIGS. 12 and 13 illustrate cross-sectional views showing a method of manufacturing a positive electrode layer for an all-solid-state battery according to some embodiments of the present disclosure.

FIG. 14 is a flow chart illustrating a method of manufacturing a positive electrode layer for an all-solid-state battery, according to various example embodiments.

DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this disclosure, it is understood that, when an element is referred to as being "on" another element, the element can be "directly on" the other element, or intervening elements may be present therebetween. In the drawings, thicknesses of some components may be exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this disclosure do not exclude the presence or addition of one or more other components.

In this disclosure, the term "combination thereof" may refer to a mixture, a stack, a composite, a copolymer, an alloy, a blend, or a reaction product.

In this disclosure, the term "metal" may include metals or metalloids, such as silicon and germanium, in an elemental or ionic state.

In this disclosure, the term "alloy" may refer to a mixture of two or more metals.

In this disclosure, the term "positive electrode active material" may refer to a positive electrode material capable of undergoing lithiation and delithiation.

In this disclosure, the term "negative electrode active material" may refer to a negative electrode material capable of undergoing lithiation and delithiation.

In this disclosure, the terms "lithiation" and "to lithiate" may refer to a process of adding lithium to a positive electrode active material or a negative electrode active material.

In this disclosure, the terms "delithiation" and "to delithiate" may refer to a process of removing lithium from a positive electrode active material or a negative electrode active material.

In this disclosure, the terms "charge" and "to charge" may refer to a process of providing electrochemical energy to a battery.

In this disclosure, the terms "discharge" and "to discharge" may refer to a process of removing electrochemical energy from a battery.

In this disclosure, the term "positive electrode" may refer to an electrode in which electrochemical reduction and lithiation occur during a discharge process.

In this disclosure, the term "negative electrode" may refer to an electrode in which electrochemical oxidation and delithiation occur during a discharge process.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

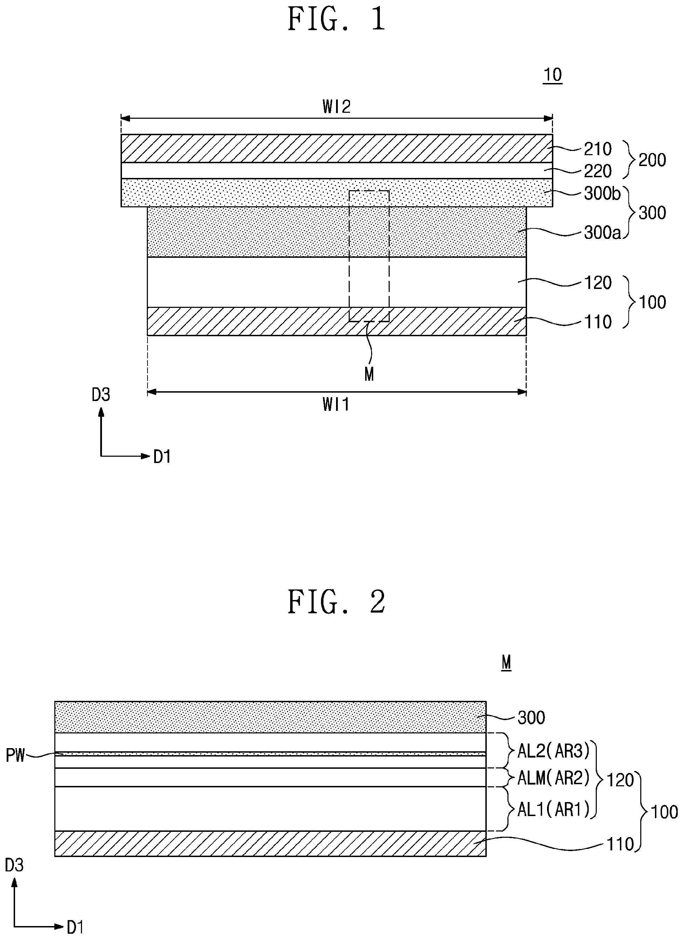

FIG. 1 illustrates a cross-sectional view showing an all-solid-state battery, according to some example embodiments of the present disclosure. Referring to FIG. 1, a mono-cell 10 of an all-solid-state battery according to an example embodiment of the present disclosure is illustrated. The mono-cell 10 may include a positive electrode layer 100, a negative electrode layer 200 opposite to the positive electrode layer 100, and a solid electrolyte layer 300 between the positive electrode layer 100 and the negative electrode layer 200. The present disclosure, however, is not limited thereto, and the mono-cell 10 may further include an additional functional layer, such as, e.g., an adhesion enhancement layer, between the positive electrode layer 100 and the solid electrolyte layer 300, or between the negative electrode layer 200 and the solid electrolyte layer 300. The mono-cell 10 may be a cell stack.

The positive electrode layer 100 may include a positive electrode current collector 110, and a positive electrode active material layer 120 on the positive electrode current collector 110. The positive electrode active material layer 120 may include at least one of a positive electrode active material, a solid electrolyte, a conductive material, and a binder.

The positive electrode current collector 110 may provide a reference surface on which the positive electrode active material layer 120 is disposed. The positive electrode current collector 110 may have a plate or foil shape. For example, the positive electrode current collector 110 may include at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

In another embodiment of the present disclosure, the positive electrode current collector 110 may be omitted. Although not shown, to increase adhesion between the positive electrode current collector 110 and the positive electrode active material layer 120, a carbon layer having a thickness in a range of $\geq 0.1 \mu m$ to $\leq 4 \mu m$ may further be disposed between the positive electrode current collector 110 and the positive electrode active material layer 120.

The positive electrode active material may include a material that can reversibly absorb and desorb lithium ions. For example, the positive electrode active material may include at least one of lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be included alone or in a mixture of two or more substances.

The lithium transition metal oxide may be or include, for example, a compound represented by one of $Li_aA_{1-b}B_bD_2$ (where $0.90 \leq a \leq 1$ and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $LiE_{2-b}B_bO_{4-c}D_c$ (where $0 \leq b \leq 0.5$ and $0 \leq c \leq 0.05$), $Li_aNi_{1-b-c}Co_bB_cD_\alpha$ (where $0.90 \leq a \leq 1$, $0 \leq b \leq 0.5$, $0 \leq c \leq 0.05$, and $0<\alpha<2$), $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0<\alpha<2$), $Li_aNi_{1-b-c}Mn_bB_cD_\alpha$ (where $0.90 \leq a \leq 1$, $0 \leq b \leq 0.5$, $0 \leq c \leq 0.05$, and $0< \alpha \leq 2$), $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0<\alpha<2$), $Li_aNi_bE_cG_dO_2$ (where $0.90 \leq a \leq 1$, $0 \leq b \leq 0.9$, $0 \leq c \leq 0.5$, and $0.001 \leq d \leq 0.1$), $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (where $0.9 \leq a \leq 1$ and $0.001 \leq b \leq 0.1$), $Li_aCoG_bO_2$ (where $0.90 \leq a \leq 1$ and $0.001 \leq b \leq 0.1$), $Li_aMnG_dO_2$ (where $0.90 \leq a \leq 1$ and $0.001 \leq b \leq 0.1$), $Li_aMn_2G_bO_4$ (where $0.90 \leq a \leq 1$ and $0.001 \leq b \leq 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \leq f \leq 2$), $Li_{3-f}Fe_2(PO_4)_3$ (where $0 \leq f \leq 2$), $LiFePO_4$. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, a lithium salt of a transition metal oxide having a layered rock salt type structure among the lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 of a ridge of a unit lattice. The lithium transition metal oxide having the layered rock salt type structure may be or include a ternary lithium transition metal oxide, such as $LiNi_xCo_yAl_zO_2$ (NCA) or $LiNi_xCo_yMn_zO_2$ (NCM) (where $0<x<1$, $0<y<1$, $0<z<1$, and $x+y+z=1$). When the positive electrode active material includes a ternary lithium transition metal oxide having the layered rock salt type structure, the mono-cell 10 may have increased energy density and improved thermal stability.

The compound included in the positive electrode active material may be covered with a coating layer (not shown). The positive electrode active material may be included in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound forming the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, $Li_2O$-$ZrO_2$ (LZO). A method for forming the coating layer may be one of any methods that do not adversely affect the physical characteristics of the positive electrode active material. The method of forming the coating layer may include, for example, spray coating or immersion.

When the positive electrode active material includes nickel (Ni) as a ternary lithium transition metal oxide such as NCA or NCM, a capacity density of the mono-cell 10 may increase to reduce metal elution from the positive electrode active material in a charged state. Therefore, the mono-cell 10 may improve in cycle characteristics in a charged state. The language "cycle characteristics" may refer to properties that indicate the degree to which the mono-cell 10 is degraded due to charge and discharge. For example, the mono-cell 10 with high cycle characteristics may degrade less due to charge and discharge, while the mono-cell 10 with low cycle characteristics may degrade more due to charge and discharge.

The positive electrode active material may have, for example, a substantially spherical or substantially oval particle shape. There is no limitation on a particle diameter and an amount of the positive electrode active material.

The solid electrolyte may include a sulfide-based solid electrolyte with desired or improved lithium ion conductivity. The sulfide-based solid electrolyte may include, for example, at least one of $Li_2S$-$P_2S_5$, $Li_2S$-$P_2S_5$-LiX (where X is or includes a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are each a positive integer, and "Z" is or includes one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, and "M" is or includes one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

For example, the sulfide-based solid electrolyte may be or include an argyrodite-type compound including $Li_{7-a}M_aPS_{6-c}X_c$ (where $0 \leq a \leq 2$ and $0 \leq c \leq 2$). In the chemical formula above, X may be or include at least one of F, Br, Cl, or a combination thereof. In addition, M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of $\geq$ 1.5 g/cc to $\leq$ 2.0 g/cc. As the argyrodite-type solid electrolyte has a density that is equal to or greater than about 1.5 g/cc, it may be possible to decrease an internal resistance of the all-solid-state battery and to hinder or prevent a solid electrolyte film from short-circuit and penetration caused by the formation of lithium dendrite. The solid electrolyte may have an elastic modulus in a range of, for example, about 15 GPa to $\leq$ 35 GPa.

The solid electrolyte included in the positive electrode active material layer 120 may have a medium-sized average particle diameter ($D_{50}$) that is less than the average particle diameter of a solid electrolyte included in the solid electrolyte layer 300. For example, the medium-sized average particle diameter ($D_{50}$) of the solid electrolyte in the positive electrode active material layer 120 may be equal to or less than about 90%, equal to or less than about 80%, equal to or less than about 70%, equal to or less than about 60%, equal to or less than about 50%, equal to or less than about 40%, equal to or less than about 30%, or equal to or less than about 20% of the medium-sized average particle diameter ($D_{50}$) of a solid electrolyte included in the solid electrolyte layer 300. The medium-sized average particle diameter ($D_{50}$) may be a median diameter measured by a laser particle size distribution analyzer.

The positive electrode active material layer 120 may include a conductive material. The conductive material may exhibit conductivity, without causing chemical change of the mono-cell 10, to increase conductivity of the positive electrode active material and the solid electrolyte. The conductive material may include a carbon-based material. The conductive material may include, for example, one or more of graphite, carbon black, acetylene black, carbon nano-fiber, and carbon nano-tube.

The positive electrode active material layer 120 may further include a binder. The binder may include a material that adheres the positive electrode active material, the solid electrolyte, and the conductive material included in the positive electrode active material layer 120 to each other, and that improves adhesion between the positive electrode active material layer 120 and the positive electrode current collector 110. The binder may include, for example, at least one of polyvinylidenefluoride, styrene-butadiene rubber (SBR), polytetrafluoroethylene, vinylidenefluoride/hexafluoropropylene copolymer, polyacrylonitrile, or polymethyl methacrylate.

In the positive electrode active material layer 120, the positive electrode active material may be included in an amount in a range of $\geq$ 85 parts by weight to $\leq$ 92 parts by weight relative to 100 parts by weight of a sum of the positive electrode active material, the solid electrolyte, the conductive material, and the binder.

In the positive electrode active material layer 120, the conductive material may be present in an amount in a range of $\geq$ 1 part by weight to $\leq$ 50 parts by weight relative to 100 parts by weight of the solid electrolyte. When the conductive material is present in an amount that is less than about 1 part by weight relative to 100 parts by weight of the solid electrolyte, the positive electrode active material layer 120 may decrease in electrical conductivity. When the conductive material is present in an amount that is greater than about 50 parts by weight relative to 100 parts by weight of the solid electrolyte, a proportion of the conductive material may be substantially increased to cause incomplete formation of a coating layer that covers a surface of the solid electrolyte.

According to some example embodiments, the positive electrode active material layer 120 may further include at least one additive such as or including at least one of a filler, a coating agent, a dispersant, and an ionic conductivity agent, in addition to the positive electrode active material, the solid electrolyte, the conductive material, and the binder.

The solid electrolyte layer 300 may be disposed between the positive electrode layer 100 and the negative electrode layer 200, and may include a sulfide-based solid electrolyte with desired or improved lithium ion conductivity. The solid electrolyte included in the solid electrolyte layer 300 may include a material that is the same as, or different from, the materials included in the solid electrolyte of the positive electrode active material layer 120.

In an example embodiment, the solid electrolyte layer 300 may include a sulfide-based solid electrolyte. The sulfide-based solid electrolyte may be prepared by, for example, melting and quenching or mechanically milling a starting raw material such as, e.g., $Li_2S$ or $P_2S_5$5. In addition, the resulting solid electrolyte product may be thermally treated after the treatment mentioned above. The solid electrolyte may be in an amorphous state, a crystalline state, or a mixed state of amorphous and crystalline states. The solid electrolyte may include at least one of sulfur (S), phosphorus (P), and lithium (Li), among component elements included in the sulfide-based solid electrolyte mentioned above. For example, the solid electrolyte may be or include a material including $Li_2S$-$P_2S_5$. When a material including $Li_2S$-$P_2S_5$ is included as a sulfide-based solid electrolyte material of the solid electrolyte, a mixing molar ratio of $Li_2S$ and $P_2S_5$ may be in a range of about 50:50 to about 90:10 (or $Li_2S:P_2S_5$ = 50:50 ~ 90: 10).

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

For example, the sulfide-based solid electrolyte may be or include an argyrodite-type compound including $Li_{7-a}M_aPS_{6-c}X_c$ (where $0 \leq a \leq 2$ and $0 \leq c \leq 2$). In the chemical formula above, X may be or include at least one of F, Br, Cl, or a combination thereof. In addition, M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of $\geq$ 1.5 g/cc to $\leq$ 2.0 g/cc. As the argyrodite-type solid electrolyte has a density that is equal to or greater than about 1.5 g/cc, it may be possible to decrease an internal resistance of the all-solid-state battery and to hinder or prevent a solid electrolyte film from short-circuit and penetration caused by the formation of lithium dendrite. The solid electrolyte may have an elastic modulus in a range of, for example, about 15 GPa to $\leq$ 35 GPa.

The solid electrolyte layer 300 may further include a binder. The binder included in the solid electrolyte layer 300 may include, for example, at least one of styrene-butadiene rubber (SBR), polytetrafluoroethylene, polyvinylidenefluoride, polyethylene, but the present disclosure is not limited thereto. The binder of the solid electrolyte layer 300 may be the same as, or similar to, the binder of the positive electrode active material layer 120, or the binder of a negative electrode coating layer 220 which is discussed below.

The negative electrode layer 200 may include a negative electrode current collector 210, and a negative electrode coating layer 220 on the negative electrode current collector 210. The negative electrode current collector 210 may provide a reference surface on which the negative electrode coating layer 220 is disposed. The negative electrode current collector 210 may include a material that does not react, or does not substantially react, with lithium, for example, a material that does not form an alloy or a compound with lithium. For example, the negative electrode current collector 210 may include a metal such as or including at least one of copper (Cu), stainless steel, titanium (Ti), iron (Fe), cobalt (Co), and nickel (Ni). A thickness of the negative electrode current collector 210 may range from about 1 $\mu$m to $\leq$ 20 $\mu$m, from about 5 $\mu$m to $\leq$ 15 $\mu$m, or from about 7 $\mu$m to $\leq$ 10 $\mu$m.

The negative electrode current collector 210 may be formed of or include one of the metals mentioned above, an alloy of two or more of the metals mentioned above, or a coating material. The negative electrode current collector 210 may have, for example, a plate or foil shape. In an example embodiment, the negative electrode current collector 210 may be omitted.

The negative electrode coating layer 220 may induce growth of lithium metal between the negative electrode coating layer 220 and the negative electrode current collector 210 when the mono-cell 10 is charged. The negative electrode coating layer 220 may be configured as a protection layer for lithium metal, and contemporaneously or simultaneously may hinder or suppress the precipitation and growth of lithium dendrite.

The negative electrode coating layer 220 may include metal and carbon. For example, the negative electrode coating layer 220 may include a metal such as or including at least one of gold (Au), platinum (Pt), palladium (Pd), silicon (Si), silver (Ag), aluminum (Al), bismuth (Bi), tin (Sn), and zinc (Zn). The negative electrode coating layer 220 may include at least one carbon such as or including at least one of carbon black, acetylene black, furnace black, Ketjen black, and graphene. In an example embodiment, the negative electrode coating layer 220 may include a mixture of carbon black and silver (Ag).

The negative electrode coating layer 220 may further include an additive in addition to metal and carbon. The negative electrode coating layer 220 may include at least one additive such as or including, for example, at least one of a binder, a filler, a coating agent, a dispersant, and an ionic conductivity agent.

The negative electrode coating layer 220 may have a thickness that is less than the thickness of the positive electrode active material layer 120. For example, the negative electrode coating layer 220 may have a thickness that is equal to or less than about 50%, equal to or less than about 40%, equal to or less than about 30%, equal to or less than about 20%, equal to or less than about 10%, or equal to or less than about 5% of the thickness of the positive electrode active material layer 120. The negative electrode coating layer 220 may have a thickness in a range of, for example, about $1 \mu m$ to $\leq 20 \mu m$, about $2 \mu m$ to $\leq 10 \mu m$, or about $3 \mu m$ to $\leq 7 \mu m$. When the negative electrode coating layer 220 has a substantially small thickness, lithium dendrite formed between the negative electrode coating layer 220 and the negative electrode current collector 210 may collapse the negative electrode coating layer 220 to reduce cycle characteristics of the mono-cell 10. When the negative electrode coating layer 220 has a substantially large thickness, the mono-cell 10 may have a decreased energy density and an increased internal resistance caused by the negative electrode coating layer 220, thereby reducing cycle characteristics of the mono-cell 10.

Although not shown, a carbon layer may further be included to increase adhesion between the negative electrode coating layer 220 and the solid electrolyte layer 300.

According to some example embodiments of the present disclosure, the positive electrode layer 100 may have a width that is less than the width of the negative electrode layer 200. For example, the positive electrode layer 100 may have a first width W1 in a first direction D1, and the negative electrode layer 200 may have a second width W2 in the first direction D1. The first width W1 may be less than the second width W2. As the first width W1 is less than the second width W2, the positive electrode layer 100 may further be provided on a circumference thereof with a gasket to compensate the width difference.

Referring to FIG. 1, according to some example embodiments of the present disclosure, the solid electrolyte layer 300 may include a positive electrode solid electrolyte layer 300a and a negative electrode solid electrolyte layer 300b. The positive electrode solid electrolyte layer 300a and the negative electrode solid electrolyte layer 300b may be stacked to constitute one solid electrolyte layer 300. The positive electrode solid electrolyte layer 300a may be in contact with the positive electrode active material layer 120, and the negative electrode solid electrolyte layer 300b may be in contact with the negative electrode coating layer 220.

For example, the positive electrode solid electrolyte layer 300a and the negative electrode solid electrolyte layer 300b may include solid electrolytes having the same composition. Alternatively, the positive electrode solid electrolyte layer 300a and the negative electrode solid electrolyte layer 300b may include solid electrolytes having different compositions.

The positive electrode solid electrolyte layer 300a may have the first width W1, and the negative electrode solid electrolyte layer 300b may have the second width W2. For example, the positive electrode solid electrolyte layer 300a may have a width that is less than the width of the negative electrode solid electrolyte layer 300b. The first width W1 of the positive electrode solid electrolyte layer 300a may be less than the second width W2 of the negative electrode solid electrolyte layer 300b. As the first width W1 of the positive electrode solid electrolyte layer 300a is less than the second width W2 of the negative electrode solid electrolyte layer 300b, the positive electrode solid electrolyte layer 300a may further be provided on its circumference with a gasket to compensate the width difference.

FIG. 2 illustrates an enlarged view showing section M of FIG. 1. For brevity of description, omission is made to avoid a redundant explanation of the positive electrode layer discussed above with reference to FIG. 1.

Referring to FIG. 2, the positive electrode active material layer 120 may be disposed on the positive electrode current collector 110. The positive electrode active material layer 120 may include a first active material layer AL1 on the positive electrode current collector 110, a second active material layer AL2 on the first active material layer AL1, and a middle layer ALM interposed between the first active material layer AL1 and the second active material layer AL2.

The first active material layer AL1 may include at least one of a first positive electrode active material, a first solid electrolyte, a first binder, and a first conductive material. In the first active material layer AL1, the first positive electrode active material may be present in an amount in a range of $\geq 85$ wt% to $\leq 92$ wt% relative to total weight of the first active material layer AL1, and the first binder may be present in an amount that is equal to or less than about 5 wt% relative to the total weight of the first active material layer AL1.

The middle layer ALM may include at least one of a third solid electrolyte, a third binder, and a third conductive material. In the middle layer ALM, an amount of the third solid electrolyte, the third binder, and the third conductive material may be equal to or greater than about 50 wt% relative to the total weight of the middle layer ALM. For example, an amount of the third binder may be equal to or greater than about 10 wt% relative to the total weight of the middle layer ALM. An ionic conductivity at a temperature in a range of $\geq 25°C$ to $\leq 35°C$ of the middle layer ALM may range from about 0.83 mS/cm to $\leq$ 0.98 mS/cm.

The middle layer ALM may include a third positive electrode active material. An amount of the third positive electrode active material in the middle layer ALM may be less than the amount of the first positive electrode active material in the first active material layer AL1, and less than the amount of a second positive electrode active material in the second active material layer AL2 which is discussed below. The amount of the third positive electrode active material in the middle layer ALM may be equal to or less than about 50 wt% relative to the total weight of the middle layer ALM. In some example embodiments of the present disclosure, the middle layer ALM may not include the third positive electrode active material.

The second active material layer AL2 may include a second positive electrode active material, a second solid electrolyte, a second binder, and a second conductive material. In the second active material layer AL2, the second positive electrode active material may be present in an amount in a range of $\geq 85$ wt% to $\leq 92$ wt% relative to total weight of the second active material layer AL2, and the second binder may be present in an amount in a range of equal to or less than about 5 wt% relative to the total weight of the second active material layer AL2.

The second active material layer AL2 may further include a porous film PW impregnated therein. The porous film PW may include a plurality of pores. For example, the porous film PW may have a porosity in a range of $\geq 50\%$ to $\leq 99\%$, about 60% to $\leq 95\%$, or about 70% to $\leq 90\%$. The pores of the porous film PW may each have a size in a range of 50 nm to $\leq$ 500 nm, or about 100 nm to $\leq 300$ nm. When the porosity and the pore size of the porous film PW fall within the ranges above, a positive electrode active material may readily infiltrate into the porous film PW. The porous film PW may contain an active material which amount is sufficient enough to constitute a positive electrode self-standing film.

The porous film PW may have a small thickness. The thickness of the porous film PW may range from about 5 $\mu$m to $\leq 20$ $\mu$m, from about 5 $\mu$m to $\leq 15$ $\mu$m, or from about 8 $\mu$m to $\leq 10$ $\mu$m. When the thickness of the porous film PW falls within the ranges above, a loading level of a positive electrode may be improved without substantially interrupting movement of lithium ions in the positive electrode.

The porous film PW may have a weight in a range of $\geq 2$ g/m$^2$ to $\leq 4$ g/m$^2$. For example, the weight of the porous film PW may range from about 2.5 g/m$^2$ to $\leq 3.5$ g/m$^2$.

The porous film PW may have a tensile strength in a range of $\geq 0.1$ N/mm to $\leq 0.2$ N/mm. For example, the tensile strength of the porous film PW may range from about 0.1 N/mm to $\leq 0.13$ N/mm.

A permeability per thickness of the porous film PW may range from about 0.1 sec/100 ml to $\leq 1$ sec/100 ml. For example, the permeability per thickness of the porous film PW may range from about 0.1 sec/100 ml to $\leq 0.5$ sec/100 ml.

The porous film PW may include at least one of polyester, polyolefin, polyacetal, polyamide, polycarbonate, polyimide, polyether ether ketone, polyether sulfone, polyphenylene oxide, polyphenylene sulfide, and crystalline carbon. For example, the polyester may include at least one of polyethylene terephthalate, polybutylene terephthalate, polyethylene naphthalate, and the like.

According to some example embodiments of the present disclosure, the porous film PW may include crystalline carbon, for example a porous carbonaceous sheet. The porous film PW may include one or more of a single-walled carbon nano-tube and a multi-walled carbon nano-tube. As the porous film PW includes a porous carbonaceous sheet, desired or improved mechanical strength and stability may be provided. According to some example embodiments of the present disclosure, the porous film PW may be or include a porous nonwoven fabric.

According to some example embodiments of the present disclosure, the positive electrode layer 100 for an all-solid-state battery may include the porous film PW disposed in the positive electrode active material layer 120, and the positive electrode active material layer 120 may include a plurality of positive electrode active material layers AL1, ALM, and AL2 on upper and lower sides of the porous film PW, thereby achieving a high loading level. In this disclosure, the term "loading level" may refer to an amount of an active material per unit area of an electrode, and may be a factor designed by considering a diffusion coefficient of lithium ions, conduction between particles, and a path to a current collector.

In a positive electrode for an all-solid-state battery according to an example embodiment, the positive electrode active material layer 120 positioned on one side of the positive electrode current collector 110 may have a loading level that is equal to or greater than about 35 mg/cm$^2$, for example, equal to or greater than about 40 mg/cm$^2$ or equal to or greater than about 45 mg/cm$^2$.

According to some example embodiments, when the positive electrode active material layers 120 are coated on opposite sides of the positive electrode current collector 110, a total loading amount of the positive electrode active material layers 120 may be equal to or greater than about 70 mg/cm$^2$, for example, equal to or greater than about 80 mg/cm$^2$ or equal to or greater than about 90 mg/cm$^2$.

According to some example embodiments of the present disclosure, the positive electrode layer 100 for an all-solid-state battery may include the middle layer ALM interposed between the first active material layer AL1 and the second active material layer AL2. An amount of the solid electrolyte, the binder, and the conductive material in the middle layer ALM may be equal to $\leq 50$ wt% relative to the total weight of the middle layer ALM. A high amount of the binder in the middle layer ALM may cause an improvement in adhesion between the first active material layer AL1 and the middle layer ALM, and between the second active material layer AL2 and the middle layer ALM. Accordingly, the positive electrode layer 100 for an all-solid-state battery may improve in stability.

The high amount of the binder in the middle layer ALM may cause the first and second active material layers AL1 and AL2 to have each of their binders having an amount that is equal to or less than about 5 wt%. Therefore, the first and second active material layers AL1 and AL2 may each have a high amount of the positive electrode active material, and an increased capacity. In addition, a high amount of the solid electrolyte in the middle layer ALM may cause an improvement in ionic conductivity of an all-solid-state battery.

For example, the second active material layer AL2 may be manufactured in the form of a self-standing film as discussed below. The second active material layer AL2 may be manufactured in the form of a self-standing film, and provided on the first active material layer AL1, thereby providing an all-solid-state battery including a thick film with a high loading amount.

The first to third positive electrode active materials, the first to third solid electrolytes, the first to third binders, and the first to third conductive materials, may respectively be substantially the same as the positive electrode active material, the solid electrolyte, the binder, and the conductive material discussed with reference to FIG. 1.

According to some example embodiments of the present disclosure, the first active material layer AL1, the middle layer ALM, and the second active material layer AL2 may have indistinct interfaces therebetween, and may integrally constitute one positive electrode active material layer 120.

In this case, the positive electrode active material layer 120 may include a first section AR1 on the positive electrode current collector 110, a third section AR3 adjacent to the solid electrolyte layer 300, and a second section AR2 between the first section AR1 and the third section AR3.

In an example, the first section AR1 may correspond to the first active material layer AL1. The second section AR2 may correspond to the middle layer ALM, and the third section AR3 may correspond to the second active material layer AL2.

For example, the second section AR2 may be defined by a concentration profile of a solid electrolyte, a binder, and a conductive material. For example, an amount of the solid electrolyte, the binder, and the conductive material may abruptly increase on the second section AR2, and an amount of a positive electrode active material may drastically decrease on the second section AR2. The second section AR2 may be defined to refer to a given section where an amount of the binder and the conductive material abruptly increases and then drastically decreases, and/or an amount of the positive electrode active material abruptly decreases and then drastically increases. In addition, an upper side of the given section (or the second section AR2) may be defined as the third section AR3, and a lower side of the given section (or the second section AR2) may be defined as the first section AR1.

The concentration profile of the solid electrolyte, the binder, and the conductive material may be measured through an optical method, an electron microscopy analysis, or an X-ray diffraction analysis, but the present disclosure is not limited thereto.

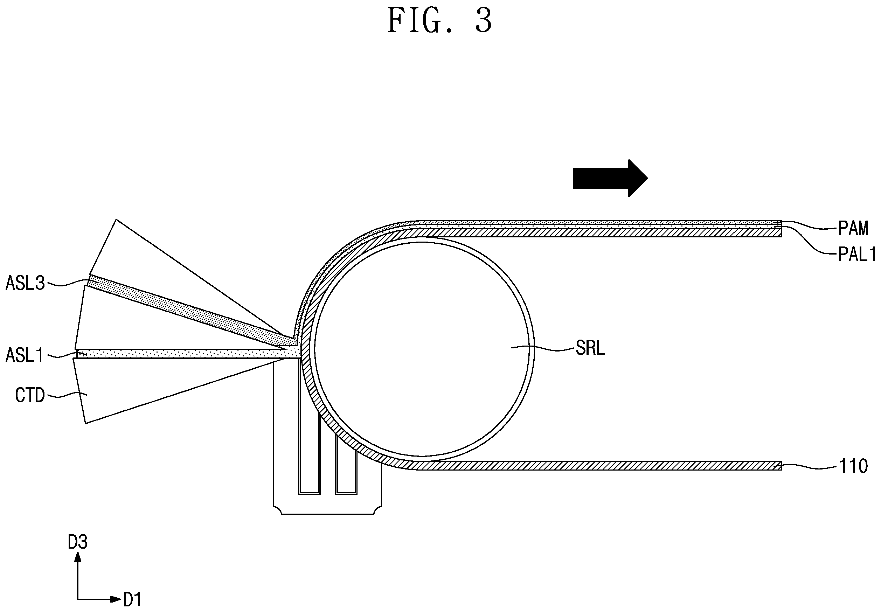

FIGS. 3 to 6 illustrate cross-sectional views showing a method of manufacturing a positive electrode layer for an all-solid-state battery, according to some example embodiments of the present disclosure. For brevity of description, omission is made to avoid a redundant explanation of the positive electrode layer discussed above with reference to FIG. 1.

Referring to FIG. 3, a wound positive electrode current collector 110 may be unwrapped and fed into a coating process. The traveling positive electrode current collector 110 may be transported and coated in a first direction D1 by a supporting roll SRL. On the supporting roll SRL, the positive electrode current collector 110 may undergo a coating process.

A coating die CTD may be disposed adjacent to the supporting roll SRL. The coating die CTD may include two holes for slurry injection. The two slurry injection holes may be correspondingly provided with a first positive electrode slurry ASL1 and a third positive electrode slurry ASL3. The coating die CTD may be configured such that the first positive electrode slurry ASL1 and the third positive electrode slurry ASL3 are coated, e.g., sequentially coated, on the positive electrode current collector 110.

The first positive electrode slurry ASL1 may include a first positive electrode active material, a first solid electrolyte, a first binder, and a first conductive material. The third positive electrode slurry ASL3 may include a third positive electrode active material, a third solid electrolyte, a third binder, and a third conductive material. An amount of the third positive electrode active material in the third positive electrode slurry ASL3 may be equal to or less than about 50 wt%. A total amount of the third solid electrolyte, the third binder, and the third conductive material in the third positive electrode slurry ASL3 may be equal to or greater than about 50 wt%, and an amount of the third binder in the third positive electrode slurry ASL3 may be equal to or greater than about 10 wt%. According to some example embodiments of the present disclosure, the third positive electrode slurry ASL3 may not include the third positive electrode active material.

A solvent in each of the first and third positive electrode slurry ASL1 and ASL3 may be any suitable solvent generally used in the art, and for example, may include at least one of dimethyl sulfoxide (DMSO), isopropyl alcohol, N-methyl pyrrolidone (NMP), acetone, water, and a combination thereof.

The first positive electrode slurry ASL1 and the third positive electrode slurry ASL3, which are coated on the positive electrode current collector 110, may be dried to form a first preliminary positive electrode active material layer PAL1 and a preliminary middle layer PAM. For example, the first preliminary positive electrode active material layer PAL1 may correspond to the first active material layer AL1 of FIG. 2, and the preliminary middle layer PAM may correspond to the middle layer ALM of FIG. 2.

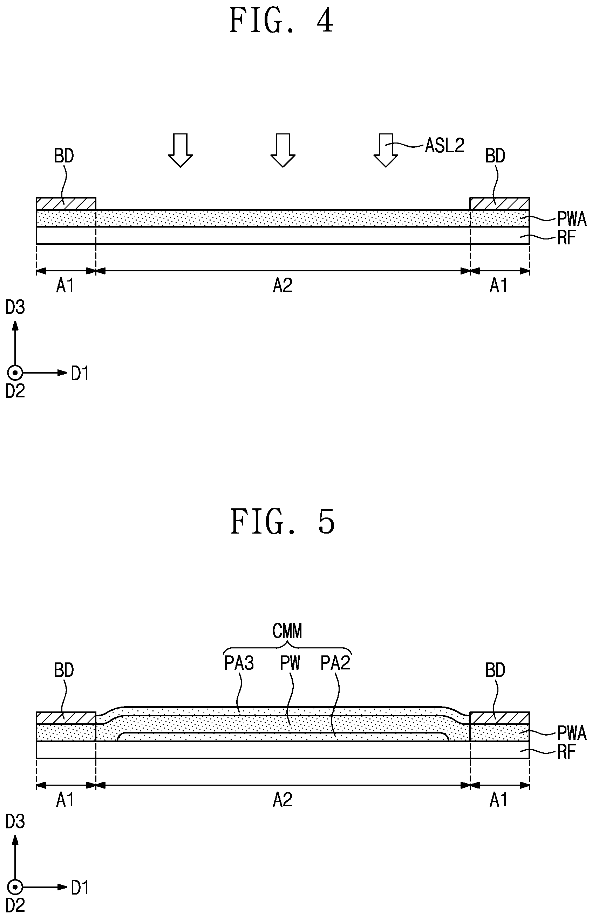

Referring to FIG. 4, a release film RF may be placed on a plane defined by a first direction D1 and a second direction D2. The second direction D2 may intersect the first direction D1. A preliminary porous film PWA may be provided on the release film RF. The preliminary porous film PWA may be stacked along a third direction D3 on the release film RF. The third direction D3 may intersect each of the first direction D1 and the second direction D2. As discussed above, the preliminary porous film PWA may include a plurality of pores. The pores of the preliminary porous film PWA may each have a size ranging from about 50 nanometers to $\leq$ 500 nanometers. The preliminary porous film PWA may have a small thickness. The preliminary porous film PWA may have a thickness in a range of $\geq$ 5 $\mu$m to $\leq$ 20 $\mu$m. For example, the thickness of the preliminary porous film PWA may range from about 5 $\mu$m to $\leq$ 15 $\mu$m, or from about 8 $\mu$m to $\leq$ 12 $\mu$m. In an example embodiment, the preliminary porous film PWA may be or include a porous nonwoven fabric.

A binder BD may be laminated on the preliminary porous film PWA. The preliminary porous film PWA may include a first region A1 on which the binder BD is laminated, and a second region A2 which does note overlap with the binder BD, and the first region A1 may be positioned on opposite sides or ends of the preliminary porous film PWA. The second region A2 may be an area other than the first region A1.

The binder BD may be formed by being coated and then cured on the first region A1 of the preliminary porous film PWA. The binder BD may include at least one of a thermosetting resin and an ultraviolet curable resin.

After the formation of the binder BD, a second positive electrode slurry ASL2 may be provided on the preliminary porous film PWA. The second positive electrode slurry ASL2 may be provided on the second region A2 of the preliminary porous film PWA.

The second positive electrode slurry ASL2 may include a second positive electrode active material, a second solid electrolyte, a second conductive material, and a second binder. A description of the second positive electrode active material, the second solid electrolyte, the second conductive material, and the second binder included in the second positive electrode slurry ASL2 may be the same as the description discussed above with reference to FIGS. 1 and 2. In an example embodiment, the second positive electrode slurry ASL2 may include, as a binder, at least one of styrene-butadiene rubber, polytetrafluoroethylene, polyvinylidenefluoride, polyethylene, polyvinyl alcohol, vinylidenefluoride/hexafluoropropylene copolymer, polyvinylidenefluoride/hexafluoropropylene copolymer, polyacrylonitrile, and polymethyl methacrylate.

After the second positive electrode slurry ASL2 is coated on the preliminary porous film PWA, the second positive electrode slurry ASL2 may be cured. The second positive electrode slurry ASL2 provided on the second region A2 of the preliminary porous film PWA may infiltrate into the preliminary porous film PWA. For example, when the second positive electrode slurry ASL2 is provided on the second region A2, the second positive electrode slurry ASL2 may infiltrate into the pores of the preliminary porous film PWA. The second positive electrode slurry ASL2 may infiltrate into the pores of the preliminary porous film PWA to form a porous film PW which pores are filled with the second positive electrode slurry ASL2.

Referring to FIG. 5, after the second positive electrode slurry ASL2 is coated and infiltrates into the preliminary porous film PWA, at least a portion of the second region A2 of the porous film PW may be spaced apart from the release film RF. A portion of the second positive electrode slurry ASL2 may move through the pores of the porous film PW such that a second preliminary active material layer PA2 may be formed between the porous film PW and the release film RF. A portion of the second positive electrode slurry ASL2 may not pass through the porous film PW and may form a third preliminary active material layer PA3 on the porous film PW.

The second preliminary active material layer PA2 that moves through the pores of the porous film PW may have a thickness less than the thickness of the third preliminary active material layer PA3 that does not pass through the porous film PW. In an example embodiment, a thickness ratio of the third preliminary active material layer PA3 to the second preliminary active material layer PA2 may range from about 2 to $\leq$ 10, from about 3 to $\leq$ 10, or from about 4 to $\leq$ 7.

Although not shown in detail, the second positive electrode slurry ASL2 included in each of the second preliminary active material layer PA2 and the third preliminary active material layer PA3 may have a single unitary shape with the active material impregnated in the porous film PW. After the second positive electrode slurry ASL2 is coated and cured, a composite layer CMM may be formed that includes the second preliminary active material layer PA2, the third preliminary active material layer PA3, and the porous film PW interposed between the second and third preliminary active material layers PA2 and PA3.

The release film RF may be subsequently peeled off. For example, the release film RF may be separated from the composite layer CMM. Thus, the release film RF may include a material capable of being separated from the composite layer CMM. For example, the release film RF may include at least one of polyethylene terephthalate, polypropylene, polymethyl pentene, and any copolymer thereof.

The porous film PW included in the composite layer CMM may have a self-standing film shape. The self-standing film may refer to a thin layer or a film that maintains a given shape on its own without being supported by another substrate.

In an example embodiment, the composite layer CMM may have a shape constituted by components depicted in FIG. 5 from which are removed the release film RF, the binder BD, and the preliminary porous film PWA that corresponds to the first region A1.

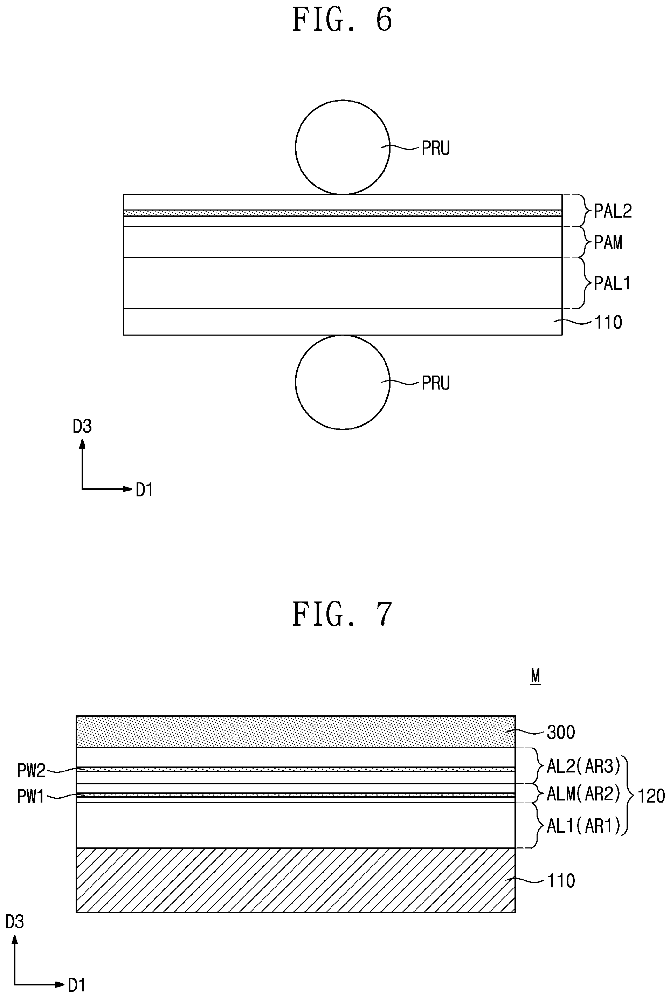

Referring to FIG. 6, a second preliminary positive electrode active material layer PAL2 may be provided on the first preliminary positive electrode active material layer PAL1 and the preliminary middle layer PAM that are discussed above with reference to FIG. 3. The second preliminary positive electrode active material layer PAL2 may be or include the composite layer CMM discussed above with reference to FIGS. 4 and 5, and may be configured to face the preliminary middle layer PAM.

After the second preliminary positive electrode active material layer PAL2 is provided, the positive electrode current collector 110, the first preliminary positive electrode active material layer PAL1, the preliminary middle layer PAM, and the second preliminary positive electrode active material layer PAL2, which are stacked, e.g., sequentially stacked, may be integrally pressed together via the pressing unit PRU. The pressing unit PRU may press the positive electrode current collector 110, the first preliminary positive electrode active material layer PAL1, the preliminary middle layer PAM, and the second preliminary positive electrode active material layer PAL2 that are stacked, e.g., sequentially stacked. The pressing unit PRU may include a pressing roller.

Referring back to FIG. 2, a positive electrode active material layer 120 may be formed through the pressing process using the pressing unit PRU. For example, in the pressing process, the first preliminary positive electrode active material layer PAL1 may be formed into a first active material layer AL1, the preliminary middle layer PAM may be formed into a middle layer ALM, and the second preliminary positive electrode active material layer PAL2 may be formed into a second active material layer AL2.

FIG. 7 illustrates an enlarged view illustrating section "M" of FIG. 1. For brevity of description, omission is made to avoid a redundant explanation of the positive electrode layer discussed above with reference to FIG. 1.

The positive electrode active material layer 120 may be disposed on the positive electrode current collector 110. The positive electrode active material layer 120 may include a first active material layer AL1 on the positive electrode current collector 110, a second active material layer AL2 on the first active material layer AL1, and a middle layer ALM interposed between the first active material layer AL1 and the second active material layer AL2.

The first active material layer AL1 may include a first positive electrode active material, a first solid electrolyte, a first binder, and a first conductive material. For example, in the first active material layer AL1, the first positive electrode active material may be present in an amount in a range of $\geq 85$ wt% to $\leq 92$ wt% relative to the total weight of the first active material layer AL1, and the first binder may be present in an amount that is equal to or less than about 5 wt% relative to the total weight of the first active material layer AL1.

The middle layer ALM may include a third solid electrolyte, a third binder, and a third conductive material. In the middle layer ALM, an amount of the third solid electrolyte, the third binder, and the third conductive material may be, for example, equal to or greater than about 50 wt% relative to the total weight of the middle layer ALM. An amount of the third binder may be, for example, equal to or greater than about 10 wt% relative to the total weight of the middle layer ALM. An ionic conductivity at a temperature in a range of $\geq 25°C$ to $\leq 35°C$ of the middle layer ALM may range from about 0.83 mS/cm to $\leq 0.98$ mS/cm.

The middle layer ALM may include a third positive electrode active material. An amount of the third positive electrode active material in the middle layer ALM may be less than the amount of the first positive electrode active material in the first active material layer AL1, and less than the amount of a second positive electrode active material in the second active material layer AL2 which is discussed below. The amount of the third positive electrode active material in the middle layer ALM may be equal to or less than about 50 wt% relative to the total weight of the middle layer ALM. In some example embodiments of the present disclosure, the middle layer ALM may not include the third positive electrode active material. The middle layer ALM may include a first porous film PW1 impregnated therein.

The first porous film PW1 may include a plurality of pores. For example, a permeability of the first porous film PW1 may range from about 50% to $\leq 99\%$, from about 60% to $\leq 95\%$, or from about 70% to $\leq 90\%$. The pores of the first porous film PW1 may each have a size in a range of 50 nm to $\leq 500$ nm or about 100 nm to $\leq 300$ nm. When the porosity and the pore size of the first porous film PW1 fall within the ranges above, a positive electrode active material may readily infiltrate into the first porous film PW1, and the first porous film PW1 may contain an active material in a sufficient enough amount to act as a positive electrode self-standing film.

The first porous film PW1 may have a small thickness. The thickness of the first porous film PW1 may range from about 5 $\mu$m to $\leq 20$ $\mu$m, from about 5 $\mu$m to $\leq 15$ $\mu$m, or from about 8 $\mu$m to $\leq 10$ $\mu$m. When the thickness of the first porous film PW1 falls within the ranges above, a loading level of a positive electrode may be improved substantially without interrupting movement of lithium ions in the positive electrode.

The first porous film PW1 may have a weight in a range of $\geq 2$ g/m$^2$ to $\leq 4$ g/m$^2$. For example, the weight of the first porous film PW1 may range from about 2.5 g/m$^2$ to $\leq 3.5$ g/m$^2$.

The first porous film PW1 may have a tensile strength in a range of $\geq 0.1$ N/mm to $\leq 0.2$ N/mm. For example, the tensile strength of the first porous film PW1 may range from about 0.1 N/mm to $\leq 0.13$ N/mm.

A permeability per thickness of the first porous film PW1 may range from about 0.1 sec/100 ml to ≤ 1 sec/100 ml. For example, the permeability per thickness of the first porous film PW1 may range from about 0.1 sec/100 ml to ≤ 0.5 sec/100 ml.

The first porous film PW1 may include at least one of polyester, polyolefin, polyacetal, polyamide, polycarbonate, polyimide, polyether ether ketone, polyether sulfone, polyphenylene oxide, polyphenylene sulfide, and crystalline carbon. For example, the polyester may include polyethylene terephthalate, polybutylene terephthalate, polyethylene naphthalate, and the like.

According to some example embodiments of the present disclosure, the first porous film PW1 may include crystalline carbon, for example, a porous carbonaceous sheet. In this case, the first porous film PW1 may include one or more of a single-walled carbon nano-tube and a multi-walled carbon nano-tube. As the first porous film PW1 includes a porous carbonaceous sheet, desired or improved mechanical strength and stability may be provided. According to some example embodiments of the present disclosure, the first porous film PW1 may be or include a porous nonwoven fabric.

The second active material layer AL2 may include a second positive electrode active material, a second solid electrolyte, a second solid electrolyte, a second binder, and a second conductive material. For example, in the second active material layer AL2, the second positive electrode active material may be present in an amount in a range of ≥ 85 wt% to ≤ 92 wt% relative to the total weight of the second active material layer AL2, and the second binder may be present in an amount that is equal to or less than about 5 wt% relative to the total weight of the second active material layer AL2. The second active material layer AL2 may include a second porous film PW2 impregnated therein. A description of the second porous film PW2 may be substantially the same as the description of the first porous film PW1.

According to some example embodiments of the present disclosure, the positive electrode layer 100 for an all-solid-state battery may include the first and second porous films PW1 and PW2 disposed in the positive electrode active material layer 120, and the positive electrode active material layer 120 may include a plurality of positive electrode active material layers AL1 and AL2 disposed on upper and lower sides of each of the first and second porous films PW1 and PW2, thereby achieving a high loading level. In this disclosure, the term "loading level" may refer to an amount of an active material per unit area of an electrode, and may be a factor designed by considering a diffusion coefficient of lithium ions, conduction between particles, and a path to a current collector.

In a positive electrode for an all-solid-state battery according to an example embodiment, the positive electrode active material layer 120 positioned on one side of the positive electrode current collector 110 may have a loading level that is equal to or greater than about 35 mg/cm$^2$, for example, equal to or greater than about 40 mg/cm$^2$ or equal to or greater than about 45 mg/cm$^2$.

According to some example embodiments, when the positive electrode active material layers 120 are coated on opposite sides of the positive electrode current collector 110, a total loading amount of the positive electrode active material layers 120 may be equal to or greater than about 70 mg/cm$^2$, for example, equal to or greater than about 80 mg/cm$^2$ or equal to or greater than about 90 mg/cm$^2$.

In addition, the positive electrode layer 100 for an all-solid-state battery according to some example embodiments of the present disclosure may include a middle layer ALM interposed between the first active material layer AL1 and the second active material layer AL2. An amount of a solid electrolyte, a binder, and a conductive material in the middle layer ALM may be equal to or greater than about 50 wt% relative to the total weight of the middle layer ALM. A high amount of the binder in the middle layer ALM may cause an improvement in adhesion between the first active material layer AL1 and the middle layer ALM, and between the second active material layer AL2 and the middle layer ALM. Accordingly, the positive electrode layer 100 for an all-solid-state battery may improve in stability.

The high amount of the binder in the middle layer ALM may cause the first active material layer AL1 and the second active material layer AL2 to have their binders each having an amount that is equal to or less than about 5 wt%. Therefore, the first and second active material layers AL1 and AL2 may each have a high amount of the positive electrode active material and an increased capacity. In addition, a high amount of the solid electrolyte in the middle layer ALM may cause an improvement in ionic conductivity of an all-solid-state battery.

Moreover, the second active material layer AL2 may be manufactured in the form of a self-standing film as discussed below. The second active material layer AL2 may be manufactured in the form of a self-standing film and provided on the first active material layer AL1, thereby providing an all-solid-state battery including a thick film with a high loading amount.

The first to third positive electrode active materials, the first to third solid electrolytes, the first to third binders, and the first to third conductive materials may respectively be substantially the same as the positive electrode active material, the solid electrolyte, the binder, and the conductive material discussed with reference to FIG. 1.

According to some example embodiments of the present disclosure, the first active material layer AL1, the middle layer ALM, and the second active material layer AL2 may have indistinct interfaces therebetween, and may integrally constitute one positive electrode layer 100.

In this case, the positive electrode active material layer 120 may include a first section AR1 on the positive electrode current collector 110, a third section AR3 adjacent to the solid electrolyte layer 300, and a second section AR2 located between the first section AR1 and the third section AR3.

The first section AR1 may correspond to the first active material layer AL1. The second section AR2 may correspond to the middle layer ALM, and the third section AR3 may correspond to the second active material layer AL2.

For example, the second section AR2 may be defined by a concentration profile of a solid electrolyte, a binder, and a conductive material. For example, an amount of the solid electrolyte, the binder, and the conductive material may abruptly increase on the second section AR2 with respect to the first section AR1, and an amount of a positive electrode active material may drastically decrease on the second section AR2 with respect to the first section AR1. The second section AR2 may be defined to refer to a given section where an amount of the binder and the conductive material abruptly increases and then drastically decreases and/or an amount of the positive electrode active material abruptly decreases and then drastically increases. In addition, an upper side of the given section (or the second section AR2) may be defined as the third section AR3, and a lower side of the given section (or the second section AR2) may be defined as the first section AR1.

The concentration profile of the solid electrolyte, the binder, and the conductive material may be measured through an optical method, an electron microscopy analysis, or an X-ray diffraction analysis, but the present disclosure is not limited thereto.

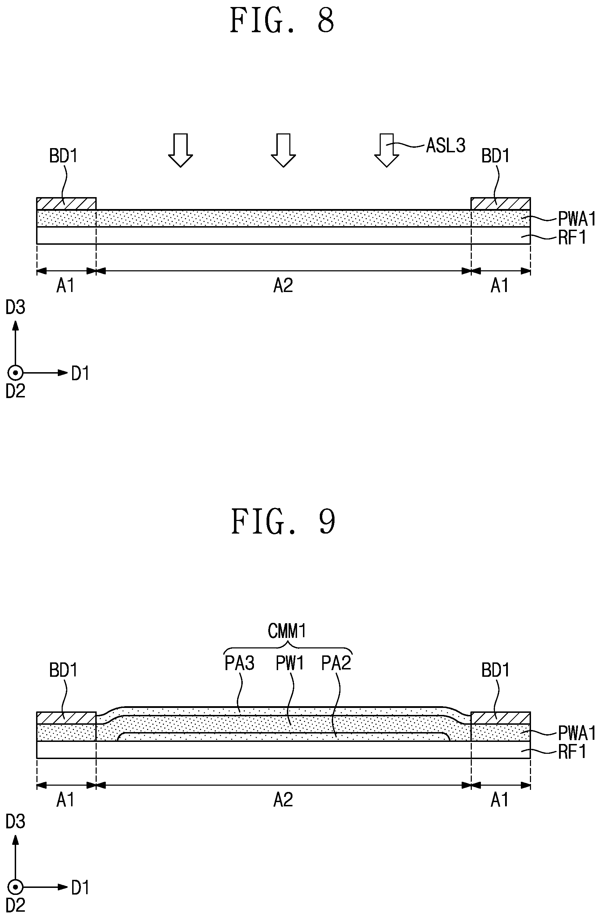

FIGS. 8 to 13 are cross-sectional views illustrating a method of manufacturing a positive electrode layer for an all-solid-state battery, according to some example embodiments of the present disclosure. For brevity of description, omission is made to avoid a redundant explanation of the positive electrode layer discussed above with reference to FIG. 1.

FIGS. 8 and 9 are cross-sectional views illustrating a method of forming a first composite layer, according to some example embodiments of the present disclosure.

A first release film RF1 may be placed on a plane defined by a first direction D1 and a second direction D2. The second direction D2 may intersect the first direction D1. A first preliminary porous film PWA1 may be provided on the first release film RF1. The first preliminary porous film PWA1 may be stacked along a third direction D3 on the first release film RF1. The third direction D3 may intersect each of the first direction D1 and the second direction D2.

The first preliminary porous film PWA1 may include a plurality of pores. The pores of the first preliminary porous film PWA1 may each have a size ranging from about 50 nanometers to ≤ 500 nanometers. The first preliminary porous film PWA1 may have a small thickness. The first preliminary porous film PWA1 may have a thickness in a range of ≥ 5 $\mu$m to ≤ 20 $\mu$m. For example, the thickness of the first preliminary porous film PWA1 may range from about 5 $\mu$m to ≤ 15 $\mu$m or about 8 $\mu$m to ≤ 12 $\mu$m. In some example embodiments of the present disclosure, the first preliminary porous film PWA1 may be or include a porous carbonaceous sheet. In some example embodiments of the present disclosure, the first preliminary porous film PWA1 may be or include a porous carbonaceous sheet.

A first binder BD1 may be laminated on the first preliminary porous film PWA1. The first preliminary porous film PWA1 may include a first region A1 on which the first binder BD1 is laminated, and a second region A2 that does not overlap with the first binder BD1, and the first region A1 may be positioned on opposite sides or ends of the first preliminary porous film PWA1. The second region A2 may be an area other than the first region A1.

The first binder BD1 may be formed by being coated and then cured on the first region A1 of the first preliminary porous film PWA1. The first binder BD1 may include at least one of a thermosetting resin and an ultraviolet curable resin.

After the formation of the first binder BD1, a third positive electrode slurry ASL3 may be provided or deposited on the first preliminary porous film PWA1. The third positive electrode slurry ASL3 may be provided on the second region A2 of the first preliminary porous film PWA1.

The third positive electrode slurry ASL3 may include a third positive electrode active material, a third solid electrolyte, a third conductive material, and a third binder. A description of the third positive electrode active material, the third solid electrolyte, the third conductive material, and the third binder included in the third positive electrode slurry ASL3 may be the same as the description discussed above with reference to FIGS. 1 and 7. According to some example embodiments of the present disclosure, the third positive electrode slurry ASL3 may not include the third positive electrode active material.

For example, the third positive electrode slurry ASL3 may include, as the third binder, at least one of styrene-butadiene rubber, polytetrafluoroethylene, polyvinylidenefluoride, polyethylene, polyvinyl alcohol, vinylidenefluoride/hexafluoropropylene copolymer, polyvinylidenefluoride/hexafluoropropylene copolymer, polyacrylonitrile, and polymethyl methacrylate.

After the third positive electrode slurry ASL3 is coated on the first preliminary porous film PWA1, the third positive electrode slurry ASL3 may be cured. The third positive electrode slurry ASL3 provided on the second region A2 of the first preliminary porous film PWA1 may infiltrate into the first preliminary porous film PWA1. For example, when the third positive electrode slurry ASL3 is provided on the second region A2, the third positive electrode slurry ASL3 may infiltrate into the pores of the first preliminary porous film PWA1. The third positive electrode slurry ASL3 may infiltrate into the pores of the first preliminary porous film PWA1 to form a first porous film PW1 which pores are filled with the third positive electrode slurry ASL3.

Referring to FIG. 9, after the third positive electrode slurry ASL3 is coated and infiltrates into the first preliminary porous film PWA1, at least a portion of the second region A2 of the first porous film PW1 may be spaced apart from the first release film RF1. A portion of the third positive electrode slurry ASL3 may move through the pores of the first porous film PW1 such that a second preliminary active material layer PA2 may be formed between the first porous film PW1 and the first release film RF1. A portion of the third positive electrode slurry ASL3 may not pass through the first porous film PW1 to form a third preliminary active material layer PA3 on the first porous film PW1.

The second preliminary active material layer PA2 that moves through the pores of the first porous film PW1 may have a thickness that is less than the thickness of the third preliminary active material layer PA3 that does not pass through the first porous film PW1. In an example embodiment, a thickness ratio of the third preliminary active material layer PA3 to the second preliminary active material layer PA2 may range from about 2 to ≤ 10, from about 3 to ≤ 10, or from about 4 to ≤ 7.

Although not shown in detail, the third positive electrode slurry ASL3 included in each of the second preliminary active material layer PA2 and the third preliminary active material layer PA3 may have a single unitary shape with the active material impregnated in the first porous film PW1. After the third positive electrode slurry ASL3 is coated and cured, a first composite layer CMM1 may be formed which includes the second preliminary active material layer PA2, the third preliminary active material layer PA3, and the first porous film PW1 interposed between the second and third preliminary active material layers PA2 and PA3.

The first release film RF1 may be subsequently peeled off. For example, the first release film RF1 may be separated from the first composite layer CMM1. Thus, the first release film RF1 may include a material capable of being separated from the first composite layer CMM1. For example, the first release film RF1 may include at least one of polyethylene terephthalate, polypropylene, polymethyl pentene, and any copolymer thereof.

The first porous film PW1 included in the first composite layer CMM1 may have a self-standing film shape. The self-standing film may refer to a thin layer or a film that maintains a given shape on its own without being supported by another substrate. In an example embodiment, the first composite layer CMM1 may have a shape constituted by components depicted in FIG. 9 from which are removed the first release film RF1, the first binder BD1, and the first preliminary porous film PWA1 that corresponds to the first region A1.

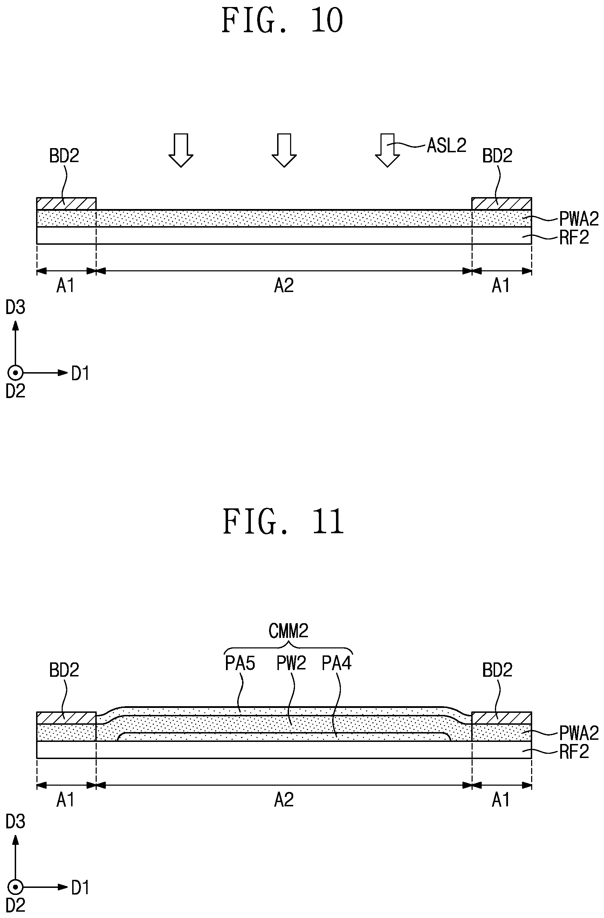

FIGS. 10 and 11 are cross-sectional views illustrating a method of forming a second composite layer, according to some example embodiments of the present disclosure.

Referring to FIGS. 10 and 11, a second positive electrode slurry ASL2 may be provided or deposited on a second preliminary porous film PWA2 disposed on a second release film RF2. The second positive electrode slurry ASL2 may be provided on the second region A2 of the second preliminary porous film PWA2.

The second positive electrode slurry ASL2 may include a second positive electrode active material, a second solid electrolyte, a second conductive material, and a second binder. A description of the second positive electrode active material, the second solid electrolyte, the second conductive material, and the second binder included in the second positive electrode slurry ASL2 may be the same as the description discussed above with reference to FIGS. 1 and 7.

Referring to FIG. 11, after the second positive electrode slurry ASL2 is coated and infiltrates into the second preliminary porous film PWA2, at least a portion of the second region A2 of the second porous film PW2 may be spaced apart from the second release film RF2. A portion of the second positive electrode slurry ASL2 may move through the pores of the second porous film PW2 such that a fourth preliminary active material layer PA4 may be formed between the second porous film PW2 and the second release film RF2. A portion of the second positive electrode slurry ASL2 may not pass through the second porous film PW2 to form a fifth preliminary active material layer PA5 on the second porous film PW2.

Although not shown in detail, the second positive electrode slurry ASL2 included in each of the fourth preliminary active material layer PA4 and the fifth preliminary active material layer PA5 may have a single unitary shape with the active material impregnated in the second porous film PW2. After the second positive electrode slurry ASL2 is coated and cured, a second composite layer CMM2 may be formed which includes the fourth preliminary active material layer PA4, the fifth preliminary active material layer PA5, and the second porous film PW2 interposed between the fourth and fifth preliminary active material layers PA4 and PA5.

The second release film RF2 may be subsequently peeled off. For example, the second release film RF2 may be separated from the second composite layer CMM2.

The second porous film PW2 included in the second composite layer CMM2 may have a self-standing film shape. Except for the differences discussed above, a method of forming the second composite layer CMM2 may be substantially the same as the method of forming the first composite layer CMM1 discussed above with reference to FIGS. 8 and 9.

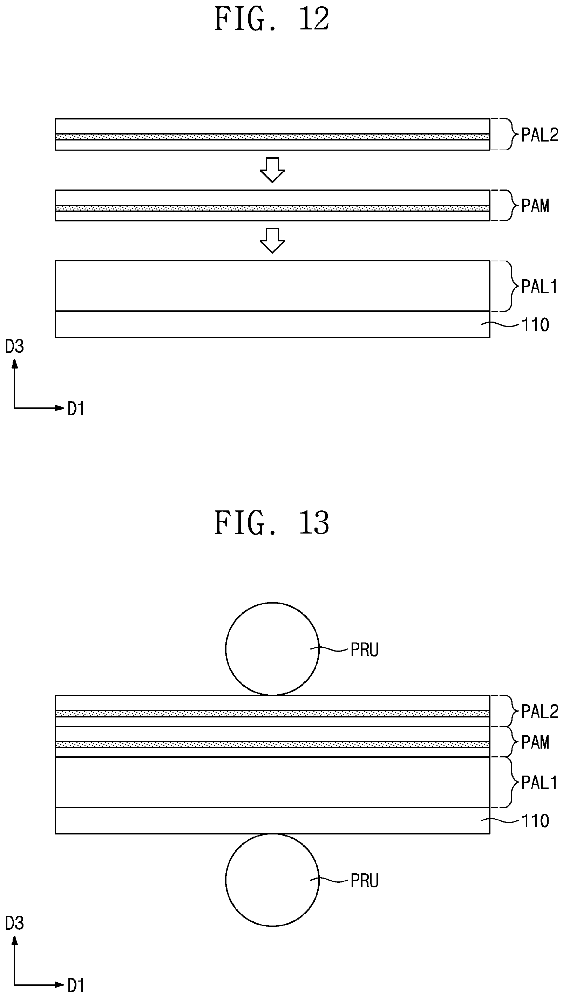

FIGS. 12 and 13 are cross-sectional views illustrating a method of manufacturing a positive electrode layer, according to some example embodiments of the present disclosure.

Referring to FIG. 12, a first preliminary positive electrode active material layer PAL1 may be formed on a positive electrode current collector 110. The first preliminary positive electrode active material layer PAL1 may be formed, e.g., only on one side of the positive electrode current collector 110. A positive electrode slurry may be coated and dried on one side of the positive electrode current collector 110, thereby forming the first preliminary positive electrode active material layer PAL1. The first positive electrode slurry may include a first positive electrode active material, a first solid electrolyte, a first binder, and a first conductive material. A description of the first positive electrode active material, the first solid electrolyte, the first binder, and the first conductive material may be the same as the description of the first positive electrode active material, the first solid electrolyte, the first binder, and the first conductive material discussed with reference to FIGS. 1 and 7.

A preliminary middle layer PAM and a second preliminary positive electrode active material layer PAL2 may be stacked, e.g., sequentially stacked, on the first preliminary positive electrode active material layer PAL1 formed on the positive electrode current collector 110. The preliminary middle layer PAM may correspond to the first composite layer CMM1 discussed above with reference to FIGS. 8 and 9, and may be provided to allow the second preliminary active material layer PA2 to face the first preliminary positive electrode active material layer PAL1. The second preliminary positive electrode active material layer PAL2 may correspond to the second composite layer CMM2 discussed above with reference to FIGS. 10 and 11, and may be provided to allow the fourth preliminary active material layer PA4 to face the third preliminary active material layer PA3 of the first composite layer CMM1.

Referring to FIG. 13, the positive electrode current collector 110, the first preliminary positive electrode active material layer PAL1, the preliminary middle layer PAM, and the second preliminary positive electrode active material layer PAL2, which are stacked, e.g., sequentially stacked, may be integrally pressed together. A pressing unit PRU may press the positive electrode current collector 110, the first preliminary positive electrode active material layer PAL1, the preliminary middle layer PAM, and the second preliminary positive electrode active material layer PAL2 that are stacked, e.g., sequentially stacked. The pressing unit PRU may include a pressing roller.

Referring back to FIG. 7, a positive electrode active material layer 120 may be formed through the pressing process using the pressing unit PRU. For example, in the pressing process, the first preliminary positive electrode active material layer PAL1 may be formed into a first active material layer AL1, the preliminary middle layer PAM may be formed into a middle layer ALM, and the second preliminary positive electrode active material layer PAL2 may be formed into a second active material layer AL2.

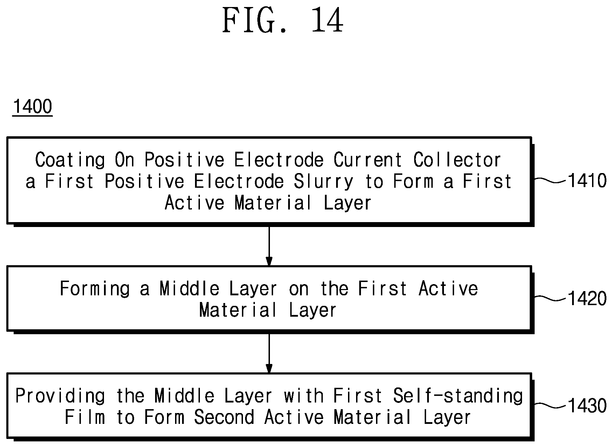

FIG. 14 is a flow chart illustrating a method of manufacturing a positive electrode layer for an all-solid-state battery, according to various example embodiments. In examples, the method 1400 includes operations 1410, 1420 and 1430. Operation 1410 includes coating on a positive electrode current collector a first positive electrode slurry to form a first active material layer. For example, the first active material layer includes a first positive electrode active material, a first solid electrolyte, a first binder, and a first conductive material. In another example, an amount of the first binder in the first active material layer is equal to or less than about 5 wt% relative to a total weight of the first active material layer.

Operation 1420 includes forming a middle layer on the first active material layer. For example, the middle layer includes a third solid electrolyte, a third binder, and a third conductive material. In an example, a total amount of the third solid electrolyte, the third binder, and the third conductive material in the middle layer is equal to or greater than about 50 wt% relative to a total weight of the middle layer. In another example, forming the middle layer includes coating a second positive electrode slurry on the first active material layer. In yet another example, forming the middle layer includes providing a second self-standing film on the first active material layer.

Operation 1430 includes providing the middle layer with a first self-standing film to form a second active material layer. For example, the second active material layer includes a second positive electrode active material, a second solid electrolyte, a second binder, and a second conductive material.

Herein, the present disclosure is described in detail with reference to some example embodiments.

Embodiment 1

A powder of $LiNi_{0.8}Co_{0.15}Mn_{0.05}O_2$ (NCM) was prepared as a first positive electrode active material. A crystalline argyrodite-type solid electrolyte ($Li_6PS_5Cl$) of 1.5 $\mu$m in average particle diameter was prepared as a first solid electrolyte, polyvinylidenefluoride (PVDF) was prepared as a first binder, and carbon nano-fiber (CNF) was prepared as a first conductive material. The first positive electrode active material, the first solid electrolyte, the first conductive material, and the first binder were mixed in a weight ratio of 85 : 13.5 : 0.5 : 1 in an N-methyl pyrrolidone solvent to prepare a first positive electrode active material slurry. The first positive electrode active material slurry was coated and dried on an aluminum positive electrode current collector, and then pressed to manufacture a first positive electrode plate.

Separately, a third positive electrode active material slurry was prepared. A powder of $LiNi_{0.8}Co_{0.15}Mn_{0.05}O_2$ (NCM) was prepared as a third positive electrode active material of the third positive electrode active material slurry. A crystalline argyrodite-type solid electrolyte ($Li_6PS_5Cl$) was prepared as a third solid electrolyte, polyvinylidenefluoride (PVDF) was prepared as a third binder, and carbon nano-fiber (CNF) was prepared as a third conductive material. The third positive electrode active material, the third solid electrolyte, the third conductive material, and the third binder were mixed in a weight ratio of 9 : 50.5 : 0.5 : 40 in an N-methyl pyrrolidone solvent to prepare the third positive electrode active material slurry. The third positive electrode active material slurry was coated on a porous nonwoven fabric of 10 $\mu$m in thickness to prepare a first positive electrode active material composite layer in the form of a self-standing film.

Separately, a second positive electrode active material slurry was prepared. A powder of $LiNi_{0.8}Co_{0.15}Mn_{0.05}O_2$

(NCM) was prepared as a second positive electrode active material of the second positive electrode active material slurry. A crystalline argyrodite-type solid electrolyte ($Li_6PS_5Cl$) was prepared as a second solid electrolyte, polyvinylidenefluoride (PVDF) was prepared as a second binder, and carbon nano-fiber (CNF) was prepared as a second conductive material. The second positive electrode active material, the second solid electrolyte, the second conductive material, and the second binder were mixed in a weight ratio of 85 : 13.5 : 0.5 : 1 in an N-methyl pyrrolidone solvent to prepare the second positive electrode active material slurry.

The second positive electrode active material slurry was coated on a porous nonwoven fabric of 10 $\mu$m in thickness to prepare a second positive electrode active material composite layer in the form of a self-standing film.

The first positive electrode active material composite layer was stacked on the first positive electrode plate to allow the porous nonwoven fabric to reside close to the positive electrode current collector. Afterwards, the second positive electrode active material composite layer was stacked on the first positive electrode active material composite layer to allow the nonwoven fabric to reside close to the positive electrode current collector. The resulting stack was pressed to manufacture a positive electrode.

The pressing process was carried out at 25°C using a pressing roller where a linear pressure of the pressing roller was controlled to 2.3 tons, and a gap between upper and lower rollers was adjusted to zero to press the positive electrode, with the result that a thickness of the pressed positive electrode was minimized to obtain a high mixture density. The positive electrode was manufactured to allow its positive electrode active material disposed on one side of the current collector to have a loading level of 45 mg/cm$^2$.

Solid Electrolyte Layer:

$Li_6PS_5Cl$ as an argyrodite-type solid electrolyte was added to an isobutylyl isobutylate binder solution added with an acrylate-based polymer to prepare a solid electrolyte slurry (the solid electrolyte and the binder were mixed in a weight ratio of 98.7 : 1.3). The prepared solid electrolyte slurry was coated on a release film of polytetrafluoroethylene, and dried for 2 hours at 60°C to manufacture a solid electrolyte layer of 100 $\mu$m in thickness.

Manufacture of Negative Electrode:

90 wt% of silver (Ag) nano-particles ($D_{50}$: 60 nm) and 10 wt% of carbon black were mixed in a water solvent to prepare a negative electrode coating layer slurry. The carbon black was a mixture of single particles having a particle diameter of 38 nm and secondary particles having a particle diameter of 275 nm in which primary particles having a particle diameter of 76 nm were aggregated. The slurry was coated on a foil-type current collector of stainless steel, and then dried to manufacture a negative electrode including a negative electrode coating layer of 12 $\mu$m in thickness and a current collector of 10 $\mu$m in thickness.

Thereafter, the positive electrode, the solid electrolyte layer, and the negative electrode were utilized to perform a generally used method to fabricate a full-cell battery.

Comparative 1

A positive electrode was manufactured according to the same method as the method described in Embodiment 1, with a difference that the third positive electrode active material, the third solid electrolyte, the third conductive material, and the third binder were mixed in a weight ratio of 85 : 13.5 : 0.5 : 1 when the second positive electrode active material slurry was prepared.

Comparative 2

The first positive electrode active material composite layer was not formed when a positive electrode was manufactured. The first positive electrode active material slurry was coated and pressed on an aluminum positive electrode current collector to manufacture a first positive electrode plate. The second positive electrode active material composite layer was stacked on the first positive electrode plate to allow the porous nonwoven fabric to reside close to the positive electrode current collector. Then, the resulting stack was pressed to obtain the positive electrode. Except for the differences discussed above, the positive electrode was manufactured according to the same method as the method described in Embodiment 1.

Comparative 3

The formation of the first and second positive electrode active material composite layers in the form of a self-standing film was excluded from the manufacture of a positive electrode. A positive electrode active material slurry was coated and dried on an aluminum positive electrode current collector, and then pressed to manufacture a first positive electrode plate serving as the positive electrode. The same method as the method described in Embodiment 1 was employed to manufacture the positive electrode. The manufactured positive electrode was utilized to perform the same method as the method described in Embodiment 1 to fabricate a full-cell battery.

Evaluation 1: Warpage

When each of the positive electrodes according to Embodiment 1, Comparative 1, and Comparative 2 was left for 1 hour in a dry room and placed on a flat floor, the positive electrode was measured its largest height from the flat floor.

Table 1:

|  | Warpage value of positive electrode (cm) |
|---|---|
| Embodiment 1 | 0.9 |
| Comparative 1 | 1.2 |
| Comparative 2 | 2.0 |

Referring to Table 1, it may be observed that Embodiment 1 has a warpage value that is less than warpage value of each of Comparative 1 and Comparative 2. It may thus be ascertained that the middle layer having a high binder amount leads to an increase in stability of the positive electrode.

Evaluation 2: Cycle-Life Characteristics of All-Solid-State Battery

Table 2 lists evaluation results of cycle-life characteristics of the full-cells fabricated according to Embodiment 1 and Comparative 3.
Each of the all-solid-state batteries according to Embodiment 1 and Comparative 3 was charged (0.33 C CC/CV charging 4.25 V 0.05 C cut) and discharged (0.33 C CC discharging 3.0 V cut) as a first cycle, and from a second cycle, the all-solid-state battery was charged (1.0 C CC/CV charging 4.25 V 0.05 C cut) and discharged (0.5 C CC discharging 3.0 V cut) while monitoring cycles until a capacity retention rate reached 80%. A capacity retention rate at an $N^{th}$ cycle was calculated according to Mathematical Equation 1.

Capacity retention rate (%) = [discharge capacity at $N^{th}$ cycle / discharge capacity at $1^{st}$ cycle] $\times$ 100      Mathematical Equation 1:

Table 2:

|  | Evaluation of cycle-life (SOH 80%) |
|---|---|
| Embodiment 1 | 100 cyc |
| Comparative 3 | 25 cyc |

Referring to Table 2, it may be ascertained that the all-solid-state battery according to Embodiment 1 exhibits a desired or improved capacity retention rate compared to the all-solid-state battery according to Comparative 3.
According to some example embodiments of the present disclosure, a positive electrode layer may include a first active material layer, a second active material layer, and a middle layer interposed between the first active material layer and the second active material layer. An amount of a solid electrolyte, a binder, and a conductive material in the middle layer may be equal to or greater than about 50 wt% relative to the total weight of the middle layer. A high amount of the binder in the middle layer may cause an improvement in adhesion between the first active material layer and the middle layer, and between the second active material layer and the middle layer. Thus, an all-solid-state battery may have increased stability and desired or improved electrochemical characteristics.
In addition, a high amount of the solid electrolyte in the middle layer may provide an all-solid-state battery with improved ionic conductivity.
Although some example embodiments of the present disclosure have been discussed with reference to accompanying figures, it is understood that various changes in form and details may be made therein without departing from the spirit and scope of the present disclosure. It is apparent to those skilled in the art that various substitution, modifications, and changes may be made thereto without departing from the scope and spirit of the present disclosure.

**Claims**

1. A positive electrode layer (100) for an all-solid-state battery, the positive electrode layer (100) comprising:

   a positive electrode current collector (110); and
   a positive electrode active material layer (120) on the positive electrode current collector (110),
   wherein the positive electrode active material layer (120) comprises:

   a first active material layer (AL1) on the positive electrode current collector (110);
   a second active material layer (AL2) on the first active material layer (AL1); and
   a middle layer (ALM) between the first active material layer (AL1) and the
   second active material layer (AL2),

   wherein the first active material layer (AL1) comprises a first positive electrode active material, a first solid electrolyte, a first binder (BD1), and a first conductive material,
   wherein the second active material layer (AL2) comprises a second positive electrode active material, a second solid electrolyte, a second binder, and a second conductive material,
   wherein the middle layer (ALM) comprises a third solid electrolyte, a third binder, and a third conductive material, and
   wherein a total amount of the third solid electrolyte, the third binder, and the third conductive material in the middle layer (ALM) is equal to or greater than about 50 wt% relative to a total weight of the middle layer (ALM).

2. The positive electrode layer (100) of claim 1, wherein the middle layer (ALM) further comprises a third positive electrode active material,
   wherein an amount of the third positive electrode active material in the middle layer (ALM) is equal to or less than about 50 wt% relative to the total weight of the middle layer (ALM).

3. The positive electrode layer (100) of claim 1 or 2, wherein the middle layer (ALM) further comprises a first porous film (PW1) impregnated in the middle layer (ALM),
   wherein the first porous film (PW1) comprises one or more of polyester, polyethylene terephthalate, polypropylene, polyethylene, and crystalline carbon.

4. The positive electrode layer (100) according to any one of claims 1 to 3, wherein the second active material layer (AL2) further comprises a second porous film (PW2) impregnated in the second active material layer (AL2),
   wherein the second porous film (PW2) comprises one or more of polyester, polyethylene terephthalate, polypropylene, polyethylene, and crystalline carbon.

5. The positive electrode layer (100) according to any one of claims 1 to 4, wherein an amount of the third binder in the middle layer (ALM) is equal to or greater than about 10 wt% relative to the total weight of the middle layer (ALM).

6. The positive electrode layer (100) according to any one of claims 1 to 5, wherein an amount of the first binder (BD1) in the first active material layer (AL1) is equal to or less than about 5 wt% relative to a total weight of the first active material layer (AL1).

7. The positive electrode layer (100) according to any one of claims 1 to 6, wherein, based on the positive electrode active material layer (120) on one side of the positive electrode current collector (110), a loading level of the positive electrode layer (100) is equal to or less than about 35 mg/cm$^2$.

8. The positive electrode layer (100) according to any one of claims 1 to 7, wherein at least one of the first binder (BD1), the second binder, and the third binder comprises at least one of styrene-butadiene rubber, polytetrafluoroethylene, polyvinylidenefluoride, polyethylene, polyvinyl alcohol, vinylidenefluoride/hexafluoropropylene copolymer, polyvinylidenefluoride/hexafluoropropylene copolymer, polyacrylonitrile, and polymethyl methacrylate.

9. The positive electrode layer (100) according to any one of claims 1 to 8, wherein the middle layer (ALM) further comprises a third positive electrode active material,

wherein an amount of the third positive electrode active material in the middle layer (ALM) is equal to or less than about 50 wt% relative to the total weight of the middle layer(ALM); and

wherein an amount of the first positive electrode active material in the first active material layer (AL1) is greater than the amount of the third positive electrode active material in the middle layer (ALM).

10. The positive electrode layer (100) according to any one of claims 1 to 9, wherein an ionic conductivity at a temperature in a range of $\geq 25°C$ to $\leq 35°C$ of the middle layer (ALM) is in a range of $\geq 0.83$ mS/cm to $\leq 0.98$ mS/cm.

11. An all-solid-state battery, comprising:

a positive electrode layer (100);
a negative electrode layer (200); and
a solid electrolyte layer (300) between the positive electrode layer (100) and the negative electrode layer (200),
wherein the positive electrode layer (100) comprises:

a positive electrode current collector (110); and
a positive electrode active material layer (120) on the positive electrode current collector (110),

wherein the positive electrode active material layer (120) comprises a positive electrode active material, a solid electrolyte, a binder, and a conductive material,
wherein the positive electrode active material layer (120) has:

a first section (AR1) adjacent to the positive electrode current collector (110);
a second section (AR2) on a center of the positive electrode active material layer (120); and
a third section (AR3) adjacent to the solid electrolyte layer (300),

wherein the second section (AR2) is between the first section (AR1) and the third section (AR3),
wherein an amount of the positive electrode active material in the second section (AR2) is less than an amount of the positive electrode active material in the first section (AR1), and
wherein the amount of the positive electrode active material in the second section (AR2) is less than an amount of the positive electrode active material in the third section (AR3).

12. The all-solid-state battery of claim 11, wherein the amount of the positive electrode active material in the second section (AR2) is equal to or less than about 50 wt% relative to a total weight of the second section (AR2).

13. The all-solid-state battery of claim 11 or 12, wherein an amount of the binder in the second section (AR2) is equal to or less than about 50 wt% relative to a total weight of the second section (AR2).

14. The all-solid-state battery according to any one of claims 11 to 13, wherein:

an amount of the binder in the first section (AR1) is equal to or less than about 5 wt% relative to a total weight of the first section (AR1), and
an amount of the binder in the second section (AR2) is equal to or less than about 5 wt% relative to a total weight of the second section (AR2).

15. The all-solid-state battery according to any one of claims 11 to 14, wherein the positive electrode active material layer (120) comprises at least one porous film (PW).

# FIG. 1

10

WI2

210 ⎫
220 ⎬ 200

300b ⎫
300a ⎬ 300

120 ⎫
110 ⎬ 100

M

WI1

D3

D1

# FIG. 2

M

300

PW

AL2(AR3) ⎫
ALM(AR2) ⎬ 120 ⎫
AL1(AR1) ⎭      ⎬ 100
110         ⎭

D3

D1

# FIG. 3

EP 4 697 409 A2

ASL3

ASL1

CTD

SRL

PAM
PAL1

110

D3
D1

# FIG. 4

BD

ASL2

BD

PWA
RF

A1

A2

A1

D3

D1

D2

# FIG. 5

CMM

PA3  PW  PA2

BD

BD

PWA
RF

A1

A2

A1

D3

D1

D2

# FIG. 6

PRU

PAL2

PAM

PAL1

110

D3

D1

# FIG. 7

M

300

PW2 — AL2(AR3)

PW1 — ALM(AR2) 120

AL1(AR1)

110

D3

D1

# FIG. 8

BD1

ASL3

BD1

PWA1

RF1

A1

A2

A1

D3

D2

D1

# FIG. 9

CMM1

PA3   PW1   PA2

BD1

BD1

PWA1

RF1

A1

A2

A1

D3

D2

D1

# FIG. 10

BD2

ASL2

BD2

PWA2
RF2

A1

A2

A1

D3

D1

D2

# FIG. 11

CMM2

PA5 PW2 PA4

BD2

BD2

PWA2
RF2

A1

A2

A1

D3

D1

D2

# FIG. 12

PAL2

PAM

PAL1
110

D3
D1

# FIG. 13

PRU

PAL2
PAM
PAL1
110

PRU

D3
D1

# FIG. 14

1400

| |
|---|
| Coating On Positive Electrode Current Collector a First Positive Electrode Slurry to Form a First Active Material Layer |

~1410

| |
|---|
| Forming a Middle Layer on the First Active Material Layer |

~1420

| |
|---|
| Providing the Middle Layer with First Self-standing Film to Form Second Active Material Layer |

~1430

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240109648